# EUROPEAN PATENT SPECIFICATION

(11) **EP 1 030 413 B1**
(45) Date of publication and mention of the grant of the patent: **29.05.2002**
(21) Application number: 00301026.1
(22) Date of filing: 09.02.2000
(51) Int. Cl.: H01S 3/063, G02B 6/12

(54) **Planar optical waveguide amplifier and method of making same**
Planarer optischen Wellenleiterverstärker und dessen Herstellungsverfahren
Amplificateur en forme de guide d'onde optique planaire et son méthode de fabrication

(30) Priority: 17.02.1999 US 120467 P; 10.11.1999 US 437800
(43) Date of publication of application: 23.08.2000
(73) Proprietor: Agere Systems Optoelectronics Guardian Corporation, Orlando, Florida 32819-8698 (US)
(72) Inventor: Bruce, Allan James, Scotch Plains, New Jersey 07076 (US); Muehlner, Dirk Joachim, Berkeley Heights, New Jersey 07974 (US); Shmulovich, Joseph, Murray Hill, New Jersey 07974 (US)
(74) Representative: Perkins, Sarah

(56) References cited:
- EP-A- 0 561 672
- EP-A- 0 821 250
- US-A- 5 844 929

## Description

### FIELD OF THE INVENTION

This invention pertains to a planar optical waveguide amplifier coupled to a waveguide.

### BACKGROUND OF THE INVENTION

Planar Optical Waveguide Amplifier (POWAs) are optical amplifiers that are attractive due to their small footprint and potentially low cost. In POWAs one also has a wider selection of materials for the gain medium, beyond the silica host, since one is not limited by the fiber fabrication process. Many of these materials have a refractive index that is substantially higher than that of a core of the standard communications fiber. A waveguide with such a core will typically have tighter confined modes, and therefore losses associated with the mode mismatch are incurred when a signal is transmitted through the waveguide - fiber interface. The same losses are incurred when the Er doped waveguide is coupled with a standard low delta waveguide used in the current Silicon Optical Bench (SiOB) technology. For POWAs to be efficient and low cost devices, they have to be integrated within the SiOB technology with the passive components such as WDMs, taps, coupler, routers, etc.

EP 0 821 250 discloses optical coupling from a passive monomode channel guide formed by ion exchange into an active thin layer covering this channel via a transition zone. The transition zone is formed either by an oblique edge of the layer cutting the channel axis or by a variable thickness of thin layer.

EP 0 561 672 describes an integrated optical amplifier in which a composite waveguide structure comprises an amplifying region intermediate outer regions, the outer regions being compatible with single-mode optical fibers. At the transitions between these differing regions a tapered high refractive index silicon nitride layer is interposed between the layers of the outer regions to form the amplifying region.

In view of the potential advantages of POWAs, it would be desirable to have available a technique for low loss coupling of a POWA to a waveguide, and to articles (e.g., an optical communication system that comprises such a coupled POWA) that comprise a POWA coupled to a waveguide. This application discloses such articles, and a technique for making the articles.

### SUMMARY OF THE INVENTION

The instant invention is embodied in a planar optical waveguide amplifier. The amplifier comprises a first planar optical waveguide and a second planar optical waveguide, comprising a rare earth-doped waveguide, in contact with the first planar waveguide. The second planar waveguide comprises at least a first taper that is selected to facilitate substantially adiabatic coupling of at least some electromagnetic radiation of at least one predetermined wavelength from the first planar waveguide to the second planar waveguide, wherein the second planar waveguide is supported continuously along its length by the first planar waveguide or by an extension of a core material thereof and has a width which is less than or equal to that of the first waveguide. The second planar waveguide may further comprise a second taper that is selected to facilitate substantially adiabatic coupling of at least some electromagnetic radiation of said at least one predetermined wavelength from the second planar waveguide to the first planar waveguide.

The electromagnetic radiation that is coupled from the first to the second planar optical waveguide typically comprises signal radiation (exemplarily of approximate wavelength 1.5µm) and pump radiation (exemplarily of approximate wavelength 0.98 or 1.48µm). The signal radiation typically is provided to the first planar waveguide by a conventional waveguide, typically optical fiber that is signal-transmissively coupled to the first planar waveguide. The pump radiation typically is provided by a conventional pump radiation source, and typically is coupled into the optical fiber or other conventional waveguide by conventional coupling means, exemplary a commercially available WDM coupler.

The invention is also embodied in a method of making an article that comprises a planar optical waveguide amplifier. The method comprises a step of making a taper that facilitates adiabatically coupling radiation of at least one predetermined wavelength from a first planar waveguide to a second planar waveguide that is in contact with the first waveguide and is a rare earth-doped (typically Er-doped) planar waveguide.

### BRIEF DESCRIPTION OF THE DRAWINGS

FIGs. 1 and 2 schematically depict coupled planar waveguides according to the invention;
FIG. 3 schematically depicts taper formation;
FIG. 4 shows a measured taper profile; and
FIGs. 5-7 schematically illustrate formation of coupled waveguides according to the invention.

### DETAILED DESCRIPTION

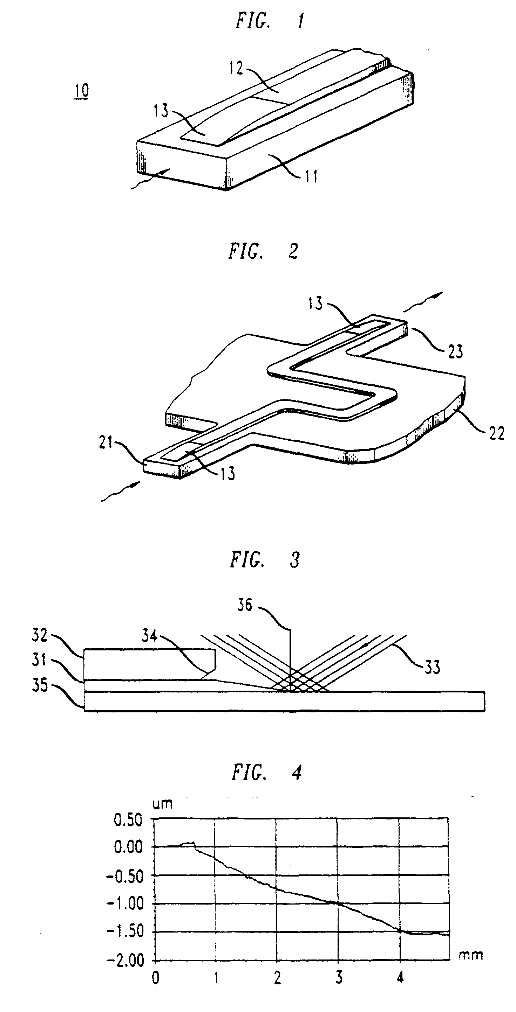

FIG. 1 schematically depicts relevant aspects of an exemplary embodiment 10 of the invention, wherein numeral 11 refers to a conventional planar optical waveguide (e.g., a P-glass or Ge-doped waveguide), numeral 12 refers to a rare earth (typically Er)-doped waveguide, and numeral 13 refers to a gradual taper of the rare earth (RE)-doped waveguide that facilitates adiabatic coupling of light of wavelength λ (e.g., signal radiation and pump radiation) from the planar waveguide into the RE-doped waveguide. The latter is typically, but not necessarily, a channel waveguide.

The front facet of the RE-doped waveguide is tapered such as to insure adiabatic transition of the guided mode (generally the fundamental mode) from planar waveguide 11 into the mode of the same index in the RE-doped waveguide 12. The taper can be vertical, 3-dimensional or only lateral, depending on the refractive indices of the materials used and the desired coupling loss. In FIG. 1, taper 13 is a vertical taper.

FIG. 2 schematically shows further aspects of an exemplary embodiment. Numerals 21 and 23 respectively refer to the entrance and exit waveguide, and 22 refers to a slab area of the support. Light propagating in the fundamental mode in the entrance waveguide is transferred adiabatically into the fundamental mode of the upper (RE-doped) waveguide. The upper waveguide can be single mode or multimode for the light of a given wavelength.

Sufficiently gradual smooth tapers (e.g., 100:1 or even more gradual) can facilitate substantially lossless transition of the light between the waveguides.

This ability to launch into the lowest mode of a multimode waveguide is especially attractive for POWAs where in certain regimes, due to gain saturation, it is advantageous to operate with a mode of a larger size, but still maintain the single mode character of the mode. That facilitates efficient coupling out of the gain medium for further signal propagation in the network.

In the embodiment of FIG. 2, the lower waveguide extends only under a relatively small portion of the upper waveguide, selected to be enough to facilitate efficient coupling between the waveguides. The remaining length of the upper waveguide is supported by a slab area that typically is made from the same material as the lower waveguide's core or some other material of appropriate refractive index.

It will be understood that the designations "upper" and "lower" waveguide are used for convenience only, and that the order of the waveguides could also be reversed.

Important features of embodiments of the invention are the tapers that facilitate adiabatic transfer of the light from one waveguide to the other.

The approaches to taper fabrication can be broadly divided into two: selective growth and selective etching. One way selective etching can be achieved is by depositing a sacrificial laterally modulated layer, whose profile is transferred into the film during the following etch step. Such modulated layers were demonstrated via shadow mask assisted e-beam evaporation and sputtering depositions. They can also be fabricated with "gray" masks. A gray mask is a known photolithographic mask in which the optical density of the feature is changed in desired fashion, so as to create a required thickness variation in the exposed photoresist, that is used as the sacrificial medium.

Another option for making smooth adiabatic film thickness variation is to modulate laterally the arrival rate of the active species in the etch process, for example utilizing a shadow mask. An example of this approach is taper formation in an ion-miller using shadow mask shadowing as a means for creating smooth thickness variations in the etched films. This approach is especially convenient for creation of very long ( millimeter size ) tapers needed for Er:glass and is currently preferred.

If one etches a surface with a directional etching beam that strikes the surface at an angle, and causes the beam to rotate around the normal to the surface, then physical objects placed on the surface will cast a shadow on the surface for part of the rotation period. The size of the shadow will vary periodically depending on the position of the beam. In the shadow areas the etch rate will be smallest near the obstacle, and will gradually increase going away from the obstacle till the etch rate reaches "an open space rate" in an area that is not affected by the shadowing.

By way of example, we used an Ar -ion beam in a Techniques ion miller. The sample was held at 45° to the beam and was rotated. We used shadow masks made out of aluminum with step sizes of 2,3,and 4mm. The total etching depth was between 1.5-2.5µm. In order to avoid formation of a step at the point where the etch of the shadow mask touches the sample, a chamfer is desirably provided. This is shown in FIG. 3. Use of a chamfer allowed fabrication of smooth tapers of required dimensions.

FIG. 3 schematically shows formation of a taper in an etched substrate 31, Numerals 32-36 refer, respectively, to the shadow mask, the etching beam, the chamfer in the shadow mask, the taper, and the normal to the substrate. FIG. 4 shows an exemplary measured taper profile produced as described above. The chamfer length was about 1.90mm, the total etch depth was 2.0µm, and the taper length was about 3.4mm. The chamfer was inclined 45° with respect to the substrate normal.

In a POWA according to the invention, the input signal is single mode (typically the fundamental mode), and the input pump light preferably is single mode (typically also fundamental mode). The RE-doped upper waveguide may be multimode for both signal radiation and pump light. The exit waveguide is selected to be single mode for the signal radiation, and may be multimode for the pump radiation. Thus, signal radiation is single mode (typically fundamental mode) at both the input and exit waveguides.

The ability of a POWA according to the invention to have single mode signal input and output, with the RE-doped upper waveguide being multimode at the signal wavelength, has potential fabrication and performance advantages. For instance, the RE-doped upper waveguide can be relatively wide, resulting in lower scattering loss.

### Fabrication

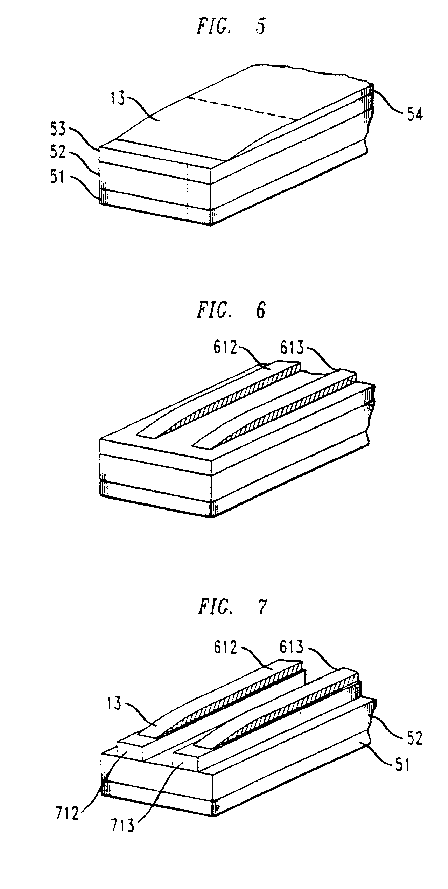

On a Si substrate is formed a 15µm thick SiO₂ lower cladding layer in conventional manner. On the lower cladding layer is formed a 4-7µm thick conventional P-glass layer, followed by deposition of a 1µm layer of conventional Er- doped aluminosilicate film. The P-glass film has refractive index 1.4666 at 1.5µm wavelength, and the Er-doped film has refractive index 1.60 at that wavelength. Tapers are formed in the upper film, using the above referred to ion miller. The resulting structure is schematically shown in FIG. 5, wherein numerals 51-54 refer, respectively, to the Si substrate, the SiO₂ lower cladding, the P-glass layer, and the Er-doped layer. Photoresist is used in conventional fashion to define the upper waveguides and is used as a mask in the etching of the upper film in the ion miller. FIG. 6 schematically shows the resulting structure, with numerals 612-613 referring to Er-doped waveguides. After removal of the first photoresist film, a second photoresist film is used to define the lower waveguide cores. Standard reactive ion etching is used to etch the P-glass cores. The resulting structure is shown schematically in FIG. 7, where numerals 712 and 713 refer to the P-glass cores. Finally, a common upper cladding is deposited over both upper and lower waveguides.

### Example

On a 7cm long P-glass planar waveguide (cross section 7µm wide, 4µm high) was formed a 5cm long Er-doped planar waveguide (cross section 5µm wide, 1µm high). Both ends of the Er-doped waveguide were tapered (taper length 4mm). Er-absorption was 17.5dB at 1.53µm. When coupled to standard single mode fibers at both input and exit, the device had an insertion loss of 2.5dB at 1.3µm. When pumped with 80mW at 980nm, the device provided 7dB net gain at 1549nm. The taper loss was estimated to be about 0.3dB.

## Claims

1. Planar optical waveguide amplifier comprising a first planar optical waveguide (11,21) and a second planar optical waveguide (12), comprising a rare earth-doped waveguide, in contact with the first planar waveguide, wherein the second planar waveguide (12) comprises at least a first taper (13) selected to facilitate substantially adiabatic coupling of at least some electromagnetic radiation of at least one predetermined wavelength from the first planar waveguide to the second planar waveguide, wherein
the second planar waveguide (12) is supported continuously along its length by the first planar waveguide (11, 21) or by an extension (22) of a core material thereof **characterised in that** the second planar waveguide has a width which is less than or equal to that of the first waveguide.

2. Amplifier according to claim 1, further comprising a second taper (13) selected to facilitate substantially adiabatic coupling of at least some electromagnetic radiation of said at least one predetermined wavelength from the second planar waveguide (12) to the first planar waveguide (23).

3. Amplifier according to claim 2, wherein said at least one predetermined wavelength is about 1.5µm.

4. Amplifier according to claim 3, adapted for coupling electromagnetic radiation of a second wavelength from the first planar waveguide to the second planar waveguide, said radiation of the second wavelength being pump radiation for said optical waveguide amplifier.

5. Amplifier according to claim, 1, wherein said first taper has 100:1 or more length-to-thickness ratio.

6. Amplifier according to claim 4, wherein said second planar waveguide is a multimode waveguide for radiation of said at least one predetermined wavelength.

7. Amplifier according to claim 4, wherein said second planar waveguide is a single mode waveguide for radiation of said at least one predetermined wavelength.

8. Amplifier according to claim 1, wherein said first planar optical waveguide is a single mode optical waveguide for radiation of said at least one predetermined wavelength.

## Patentansprüche

1. Planarer optischer Wellenleiterverstärker mit einem ersten planaren optischen Wellenleiter (11, 21) und einem zweiten planaren optischen Wellenleiter (12), umfassend einen seltenerddotierten Wellenleiter in Kontakt mit dem ersten planaren Wellenleiter, wobei der zweite planare Wellenleiter (12) mindestens eine erste Verjüngung (13) umfaßt, die so gewählt ist, daß eine im wesentlichen adiabatische Kopplung mindestens einiger elektromagnetischer Strahlung mindestens einer vorbestimmten Wellenlänge aus dem ersten planaren Wellenleiter in den zweiten planaren Wellenleiter erleichtert wird, wobei
der zweite planare Wellenleiter (12) kontinuierlich entlang seiner Länge durch den ersten planaren Wellenleiter (11, 21) oder durch eine Verlängerung (22) eines Kernmaterials davon gestützt wird, **dadurch gekennzeichnet, daß**
der zweite planare Wellenleiter eine Breite aufweist, die kleiner als die oder gleich der des ersten Wellenleiters ist.

2. Verstärker nach Anspruch 1, weiterhin mit einer zweiten Verjüngung (13), die so gewählt ist, daß eine im wesentlichen adiabatische Kopplung mindestens einiger elektromagnetischer Strahlung der mindestens einen vorbestimmten Wellenlänge aus dem zweiten planaren Wellenleiter (12) in den ersten planaren Wellenleiter (23) erleichtert wird.

3. Verstärker nach Anspruch 2, wobei die mindestens eine vorbestimmte Wellenlänge etwa 1,5 µm beträgt.

4. Verstärker nach Anspruch 3, der so ausgelegt ist, daß er elektromagnetische Strahlung einer zweiten Wellenlänge aus dem ersten planaren Wellenleiter in den zweiten planaren Wellenleiter koppelt, wobei die Strahlung der zweiten Wellenlänge Pumpstrahlung für den optischen Wellenleiterverstärker ist.

5. Verstärker nach Anspruch 1, wobei die erste Verjüngung ein Verhältnis von Länge zu Dicke von 100:1 oder mehr aufweist.

6. Verstärker nach Anspruch 4, wobei der zweite planare Wellenleiter ein Mehrmodenwellenleiter für Strahlung der mindestens einen vorbestimmten Wellenlänge ist.

7. Verstärker nach Anspruch 4, wobei der zweite planare Wellenleiter ein Einmodenwellenleiter für Strahlung der mindestens einen vorbestimmten Wellenlänge ist.

8. Verstärker nach Anspruch 1, wobei der erste planare optische Wellenleiter ein Einmodenwellenleiter für Strahlung der mindestens einen vorbestimmten Wellenlänge ist.

## Revendications

1. Amplificateur à guide d'onde optique planaire comprenant un premier guide d'onde optique planaire (11, 21) et un deuxième guide d'onde optique planaire (12), composant un guide d'onde dopé aux terres rares, en-contact avec le premier guide d'onde planaire, dans lequel le deuxième guide d'onde planaire (12) comprend au moins une première transition progressive (13) sélectionnée pour substantiellement faciliter le couplage adiabatique d'au moins une partie d'un rayonnement électromagnétique d'au moins une longueur d'onde prédéterminée depuis le premier guide d'onde planaire jusqu'au deuxième guide d'onde planaire, dans lequel le deuxième guide d'onde planaire (12) est supporté continuellement sur sa longueur par le premier guide d'onde planaire (11, 21) ou par une extension (22) d'une matière de coeur de celui-ci,
**caractérisé en ce que** le deuxième guide d'onde planaire a une largeur qui est inférieure ou égale à celle du premier guide d'onde.

2. Amplificateur selon la revendication 1, comprenant en outre une deuxième transition progressive (13) sélectionnée pour substantiellement faciliter le couplage adiabatique d'au moins une partie d'un rayonnement électromagnétique de ladite au moins une longueur d'onde prédéterminée depuis le deuxième guide d'onde planaire (12) jusqu'au premier guide d'onde planaire (23).

3. Amplificateur selon la revendication 2, dans lequel ladite au moins une longueur d'onde prédéterminée est d'environ 1,5 µm.

4. Amplificateur selon la revendication 3, adapté pour coupler un rayonnement électromagnétique d'une deuxième longueur d'onde depuis le premier guide d'onde planaire jusqu'au deuxième guide d'onde planaire, ledit rayonnement de ladite deuxième longueur d'onde étant un rayonnement de pompage dudit amplificateur à guide d'onde optique.

5. Amplificateur selon la revendication 1, dans lequel ladite première transition progressive a un rapport longueur/épaisseur de 100:1 ou plus.

6. Amplificateur selon la revendication 4, dans lequel ledit deuxième guide d'onde planaire est un guide d'onde multimode pour le rayonnement de ladite au moins une longueur d'onde prédéterminée.

7. Amplificateur selon la revendication 4, dans lequel ledit deuxième guide d'onde planaire est un guide d'onde monomode pour le rayonnement de ladite au moins une longueur d'onde prédéterminée.

8. Amplificateur selon la revendication 1, dans lequel ledit premier guide d'onde optique planaire est un guide d'onde optique monomode pour le rayonnement de ladite au moins une longueur d'onde prédéterminée.
